# EUROPÄISCHE PATENTSCHRIFT

(11) **EP 1 930 613 B1**
(45) Veröffentlichungstag und Bekanntmachung des Hinweises auf die Patenterteilung: **03.06.2009**
(21) Anmeldenummer: 07022246.8
(22) Anmeldetag: 16.11.2007
(51) Int. Cl.: F16D 25/12, F16N 7/36, F16N 7/16, F16N 7/18

(54) **Ölschöpfanordnung zur Ölversorgung von zueinander drehenden Maschinenbauteilen**
Oil distributor assembly for lubricating mutually rotating mechanical parts
Dispositif de lubrification de composants de machines tournants les uns par rapport aux autres

(30) Priorität: 27.11.2006 DE 102006055808
(43) Veröffentlichungstag der Anmeldung: 11.06.2008
(73) Patentinhaber: GKN Driveline International GmbH, 53797 Lohmar (DE)
(72) Erfinder: Utzat, Richard, 45359 Essen (DE); Schäfer, Ralf, 50679 Köln (DE); Correia, Antonio, Dipl.-Ing., 50667 Köln (DE); Katsnelson, Aleksej, Dipl.-Ing., 51107 Köln (DE); Seidl, Holger, Dipl.-Ing., 53721 Siegburg (DE)
(74) Vertreter: Oberwalleney, Stephan

(56) Entgegenhaltungen:
- DE-A1- 19 531 695
- GB-A- 191 019 614
- JP-A- 61 055 498
- US-A- 5 720 372

## Beschreibung

Die vorliegende Erfindung betrifft eine Ölschöpfanordnung zur Ölversorgung eines in einem stehenden Gehäuse um eine Drehachse rotierenden, in einem Ölsumpf laufenden Maschinenbauteil bzw. von zueinander rotierenden Maschinenbauteilen. Die Erfindung betrifft weiterhin eine Lamellenkupplung mit einer Ölschöpfanordnung der vorstehend genannten Art.

Aus der DE 103 49 030 B4 ist eine hydraulisch betätigte Lamellenkupplung bekannt. Zur Betätigung ist ein in einer Hydraulikkammer axial verschiebbarer Kolben vorgesehen, der auf das Lamellenpaket eine Axialkraft ausüben kann. Die Hydraulikkammer ist mit einer Pumpe verbunden, die den Kolben hydraulisch beaufschlagen kann. Das Hydrauliksystem umfaßt eine gemeinsame Ölfüllung, die sowohl zur Betätigung des Kolbens als auch zum Kühlen des Lamellenpakets dient.

Aus der JP 11-082537 ist eine naßlaufende Lamellenkupplung bekannt, die einen Außenlamellenträger, in dem Außenlamellen drehfest gehalten sind, und einen Innenlamellenträger, an dem Innenlamellen drehfest befestigt sind, umfaßt. An dem Innenlamellenträger ist eine Scheibe mit Abstreifarmen angebracht, die bei Drehung Öl durch axiale Öffnungen der Scheibe in den Innenraum der Lamellenkupplung fördern.

Der vorliegenden Erfindung liegt die Aufgabe zugrunde, ein verbessertes Ölschöpfsystem vorzuschlagen, das eine zuverlässige Schmier- und Kühlölversorgung von rotierenden Maschinenbauteilen gewährleistet, sowie insbesondere eine Lamellenkupplung mit verbesserten Schmier- und Kühlmöglichkeiten bereitzustellen.

Die Lösung hierfür besteht in einer Ölschöpfanordnung zur Verwendung in einem stehenden Gehäuse mit darin relativ zueinander um eine Drehachse drehbaren Maschinenbauteilen, umfassend ein mit dem Gehäuse verbindbares Ölrückführelement, das einen Abstreifer zum Anliegen an einer Außenfläche eines der Maschinenbauteile aufweist; zumindest einen Kanal, der vom Abstreifer mit Öl versorgt wird und der in einen zur Drehachse koaxialen Ringkanal mündet; und ein mit einem der Maschinenbauteile verbindbares Ölschöpfrad mit mehreren um die Drehachse verteilten Flügeln, die in den Ringkanal eintauchen und bei Drehung des Ölschöpfrads relativ zum Ölrückführelement Öl aus dem Ringkanal fördern.

Der Vorteil der erfindungsgemäßen Ölschöpfanordnung besteht darin, daß die Maschinenbauteile bei Rotation um die Drehachse zuverlässig mit Öl versorgt werden. Die Ausgestaltung mit stehendem Ölrückführelement und gegenüber diesem drehenden Ölschöpfrad ist dabei besonders effektiv, da einmal in den Ringkanal gelangtes Öl durch die Flügel des Ölschöpfrads zwingend in den Innenraum des Maschinenbauteils gepumpt wird. Dadurch, daß das Ölrückführelement samt Abstreifer im Gehäuse ortsfest gehalten ist, wird ein gezielter Ölvolumenstrom erzeugt. Die Verwendung des Abstreifers ist besonders günstig, da dieser bei Rotation des Maschinenbauteils an dessen Außenfläche befindliches Öl abstreifen und in Richtung zum Kanal leiten kann. Hierdurch kann ein großer Ölvolumenstrom zum Kanal und damit letztlich zu den drehenden Bauteilen, beispielsweise einer Lamellenkupplung, gefördert werden.

Der Abstreifer erstreckt sich vorzugsweise in axiale Richtung, wobei er in montiertem Zustand entlang der Außenfläche des drehenden Maschinenbauteils ausgerichtet ist und sich an dieser anschmiegt. Nach einer bevorzugten Ausgestaltung ist der Abstreifer im Querschnitt schaufelartig oder C-förmig gestaltet, was sich günstig auf die von der Außenfläche abstreifbare Ölmenge auswirkt. Die Ölschöpfanordnung ist so in dem stehenden Gehäuse zu befestigen, daß der radiale Kanal etwa vertikal ausgerichtet ist, so daß das Öl aufgrund der Schwerkraft nach radial innen in den Ringkanal läuft. Selbstverständlich können auch mehrere in radiale Richtung verlaufende Kanäle vorgesehen sein, die in den Ringraum münden.

Nach einer ersten Variante ist das Ölschöpfrad mit demselben Maschinenbauteil verbindbar, an dessen Außenfläche der Abstreifer des Ölrückführelements anliegt. Ölrückführelement und Ölschöpfrad wirken dabei unmittelbar zusammen. Vorzugsweise sind der Abstreifer, der Kanal und der Ringkanal einteilig hergestellt und bilden gemeinsam das Ölrückführelement. Nach einer bevorzugten Ausgestaltung umfaßt das Ölrückführelement einen scheibenförmigen Grundkörper, an dem der radiale Kanal, der Ringkanal und der Abstreifer angebracht sind. Dabei ist der Kanal vorzugsweise auf dem Grundkörper angeordnet, wobei eine Seitenwand des Kanals durch die Oberfläche des Grundkörpers gebildet ist. Der Grundkörper ist vorzugsweise leicht konisch gestaltet. Der Ringkanal hat im Längsschnitt betrachtet ein etwa C-förmiges Profil, das in Richtung zum Maschinenbauteil geöffnet ist, so daß die Flügel des Ölschöpfrads in den Ringraum eintauchen können. Vorzugsweise wird der Ringkanal durch einen äußeren Ringsteg, einen hierzu koaxialen inneren Ringsteg und einen Boden gebildet, der Teil des Grundkörpers ist. Nach einer bevorzugten Ausgestaltung endet das radial innere Ende des Kanals axial benachbart zum Ringkanal, wobei im Boden des Ringkanals ein verbindender Durchbruch vorgesehen ist. Der Durchbruch ist vorzugsweise in einem radial innenliegenden Abschnitt des Bodens angeordnet. Auf diese Weise ist eine Hinterschneidung gebildet, die gewährleistet, daß einmal in den Ringkanal gelangtes Öl nicht mehr nach außen entweichen kann. Nach einer bevorzugten Ausgestaltung umfaßt das Ölschöpfrad einen Ring, an dem die Flügel axial abstehend angebracht sind. Bei Rotation des Maschinenbauteils laufen die Flügel in dem Ringkanal um die Drehachse um. Der Ring hat vorzugsweise axiale Durchbrüche, die in Umfangsrichtung benachbart zu den Flügeln angeordnet sind und durch die das Öl von den Flügeln in Richtung Kupplung gepumpt wird. Die Flügel sind derart gestaltet, daß sie bei Rotation des Ölrückführelements Öl in axiale Richtung durch die Durchbrüche fördern. Hierfür haben sie in Radialansicht eine schaufelartige Gestalt.

Nach einer zweiten Variante ist das Ölschöpfrad mit einem anderen Maschinenbauteil als dem Maschinenbauteil, an dem das Ölrückführelement mit seinem Abstreifer anliegt, verbindbar. Diese Variante bietet sich insbesondere an, wenn die axialen Anschlußmöglichkeiten an das im Ölsumpf drehende Maschinenbauteil limitiert sind. Vorzugsweise sind der Abstreifer und der Kanal einteilig hergestellt und bilden gemeinsam das Ölrückführelement. Das Ölrückführelement ist nach einer bevorzugten Ausgestaltung mit seinem Kanal an einen im Gehäuse ausgebildeten Verbindungskanal angeschlossen ist, der in den Ringkanal mündet. Insofern wirken bei dieser Variante das Ölrückführelement und das Ölschöpfrad mittelbar über die im Gehäuse angeordneten Kanäle zusammen. Der Ringkanal ist im Gehäuse nach radial innen geöffnet, das heißt die Ölförderung erfolgt hier aus dem Ringkanal in den Innenraum des hierzu koaxialen Maschinenbauteils. Vorzugsweise umfaßt das Ölschöpfrad einen Ring mit radialen Durchbrüchen, wobei die Flügel in Umfangsrichtung benachbart zu den Durchbrüchen von dem Ring schaufelartig abstehen, um bei Rotation in einer Vorzugsdrehrichtung Öl durch die Durchbrüche nach radial innen zu fördern.

Die Lösung der obengenannten Aufgabe besteht weiter in einer Lamellenkupplung mit einer Ölschöpfanordnung gemäß der ersten Variante, umfassend einen um eine Drehachse drehbaren, in einem Ölsumpf laufenden Außenlamellenträger mit Außenlamellen; einen relativ zum Außenlamellenträger in einem Gehäuse um die Drehachse drehbar gelagerten Innenlamellenträger mit Innenlamellen, wobei die Innenlamellen und die Außenlamellen axial abwechselnd angeordnet sind und ein Lamellenpaket bilden; ein an einen der beiden Lamellenträger angeformtes Bodenteil mit mehreren umfangsverteilten axialen Durchbrüchen, das einen zwischen den beiden Lamellenträgern gebildeten ringförmigen Kupplungsraum begrenzt; ein mit einem mit dem Gehäuse fest verbundenes Ölrückführelement, das einen oberhalb des Ölsumpfes an einer Außenfläche des Außenlamellenträgers anliegenden Abstreifer, einen mit dem Abstreifer verbundenen Kanal und einen mit dem Kanal verbundenen zur Drehachse koaxialen Ringkanal aufweist; und ein mit dem Bodenteil verbundenes Ölschöpfrad mit mehreren in Umfangsrichtung verteilten, im Bereich der Durchbrüche angeordneten Flügeln, die in den Ringkanal eintauchen und bei Drehung des Bodenteils relativ zum Gehäuse Öl aus dem Ringkanal durch die Durchbrüche in den Kupplungsraum fördern.

Die erfindungsgemäße Lamellenkupplung hat die obengenannten Vorteile einer zuverlässigen Ölversorgung und damit einer guten Schmierung und Kühlung, was zu einer hohen Lebensdauer führt. Die Verwendung des stehenden Ölrückführelements ist besonders günstig, da die Schwerkraft so dazu beiträgt, daß Öl durch den radialen Kanal vom äußeren Ende nach radial innen in den Ringkanal läuft. Einmal in den Ringkanal gelangtes Öl wird durch die Flügel des drehenden Ölschöpfrads in den Innenraum der Lamellenkupplung gepumpt. Mittels dem Abstreifer kann eine große Ölmenge vom Außenlamellenträger abgeschöpft und in Richtung Kanal geleitet werden. Die hier verwendete Ölschöpfeinheit kann insbesondere jede der im Zusammenhang mit der ersten Variante genannten Ausgestaltungen aufweisen.

Nach einer bevorzugten Ausgestaltung ist das Bodenteil mit dem Außenlamellenträger fest verbunden, insbesondere einteilig gestaltet. Die axialen Durchbrüche, die den Innenraum des Gehäuses mit dem Innenraum der Kupplung verbinden, sind vorzugsweise in einem radial innenliegenden Abschnitt des Bodenteils angeordnet. So wird gewährleistet, daß das Öl radial innerhalb des Innenlamellenträgers einströmt, so daß es zwischen die Lamellen gelangt, um diese zu schmieren und zu kühlen. Hierfür ist der Innenlamellenträger vorzugsweise hülsenförmig bzw. in Form einer Hohlwelle gestaltet und hat im Bereich des Lamellenpakets radiale Durchbrüche, durch die das Öl nach außen zum Lamellenpaket fließen kann. Es sei hier nur der Vollständigkeit halber erwähnt, daß der Boden selbstverständlich auch mit dem Innenlamellenträger verbunden bzw. einteilig mit diesem gestaltet sein kann. Nach einer bevorzugten Weiterbildung hat das Bodenteil radial innen eine Nabe, die in die Hohlwelle axial eintaucht. Vorzugsweise ist zwischen einem Ende des Innenlamellenträgers und dem Boden ein Dichtring vorgesehen. So wird verhindert, daß das in den Kupplungsraum einströmende Öl innen entlang des Bodens nach radial außen strömt, ohne mit den Lamellen in Kontakt zu kommen. Vielmehr wird erreicht, daß das Öl innerhalb des Innenlamellenträgers axial in den Bereich des Lamellenpakets strömt, um durch die radialen Durchbrüche zu den Lamellen zu gelangen. Das Öl strömt dann zwischen den Lamellen nach radial außen und verläßt den Kupplungsraum durch außenliegende Spalte wieder.

Eine weitere Lösung der obengenannten Aufgabe besteht in einer Lamellenkupplung mit einer Ölschöpfanordnung gemäß der zweiten Variante, umfassend ein Gehäuse mit einem Hülsenansatz, in dem radial innen ein zu einer Drehachse koaxialer Ringkanal gebildet ist; einen im Gehäuse um die Drehachse drehbar gelagerten Innenlamellenträger mit Innenlamellen, wobei der Innenlamellenträger hülsenförmig gestaltet ist und im Bereich des Ringkanals mehrere umfangsverteilte radiale Durchbrüche aufweist; einen relativ zum Innenlamellenträger um die Drehachse drehbar gelagerten, in einem Ölsumpf laufenden Außenlamellenträger mit Außenlamellen, wobei die Innenlamellen und die Außenlamellen axial abwechselnd angeordnet sind und ein Lamellenpaket bilden; ein mit dem Gehäuse fest verbundenes Ölrückführelement, das einen oberhalb des Ölsumpfes an einer Außenfläche des Außenlamellenträgers anliegenden Abstreifer und einen mit dem Abstreifer verbundenen Kanal aufweist, der mit dem Ringkanal zur Ölversorgung verbunden ist; ein mit dem Innenlamellenträger verbundenes Ölschöpfrad mit mehreren umfangsverteilten Flügeln, die im Bereich der Durchbrüche angeordnet sind und in den Ringkanal eintauchen und bei Drehung des Innenlamellenträgers relativ zum Gehäuse Öl aus dem Ringkanal durch die Durchbrüche in den Kupplungsraum fördern. Diese Lamellenkupplung bietet in Analogie dieselben Vorteile, wie die obengenannte Lösung. Die hier verwendete Ölschöpfeinheit kann insbesondere jede der im Zusammenhang mit der zweiten Variante genannten Ausgestaltungen aufweisen.

Nach einer bevorzugten Ausgestaltung weist der Hülsenansatz einen Verbindungskanal mit einer außenliegenden Eintrittsöffnung, in die der Kanal mündet, und einer innenliegenden Austrittsöffnung, die in den Ringkanal mündet, auf. Dabei ist der Verbindungskanal im Einbauzustand der Lamellenkupplung etwa vertikal ausgerichtet, so daß die Schwerkraft zur Ölversorgung ausgenutzt werden kann. Vorzugsweise hat der hülsenförmige Innenlamellenträger im Bereich des Lamellenpakets radiale Durchbrüche. Es ist für die Ölschmierung der Lamellenkupplung besonders günstig, wenn der Innendurchmesser des Innenlamellenträgers von der Ebene der ersten Durchbrüche im Bereich des Ölschöpfrads bis zur Ebene der zweiten Durchbrüche im Bereich des Lamellenpakets zunimmt. Auf diese Weise fließt das Öl bei Drehung des Innenlamellenträgers und damit einwirkender Zentrifugalkraft automatisch in Richtung größeren Querschnitts, das heißt in Richtung Lamellenpaket. Auch bei dieser Lösung weist der Außenlamellenträger vorzugsweise ein hieran einteilig angeformtes Bodenteil mit einer Nabe auf, in die eine Welle drehfest eingesteckt werden kann.

Nach einer bevorzugten Ausführungsform, die für beide obengenannte Lösungen gilt, hat der Außenlamellenträger eine zylindrische Außenfläche, entlang derer sich der Abstreifer längs erstreckt. Dabei ist der Abstreifer etwa parallel zur Drehachse ausgerichtet, und zwar außerhalb des Ölsumpfs in einem Bereich oberhalb der Kupplung. Zwischen dem stehenden Abstreifer und dem drehenden Außenlamellenträger ist ein minimaler Spalt gebildet, so daß Reibungsverluste vermieden werden. Die Bauteile der Ölschöpfanordnung können beispielsweise aus Kunststoff, insbesondere im Spritzgußverfahren, aber auch als Umformteile aus Blech hergestellt werden. Das Ölschöpfrad kann mit dem zugehörigen Maschinenbauteil beispielsweise mittels clipsen, pressen oder schrauben verbunden sein. Das Ölrückführelement ist vorzugsweise über eine im Gehäuse angeordnete Schulter axial abgestützt und somit relativ zum Außenlamellenträger ausgerichtet. Zur Befestigung mit dem Gehäuse kommen insbesondere Schraub- oder Klebeverbindungen in Frage.

Bevorzugte Ausführungsbeispiele der Erfindung sind in den Zeichnungsfiguren dargestellt und werden nachstehend beschrieben. Es zeigt
- Figur 1: ein Ölrückführelement einer erfindungsgemäßen Ölschöpfanordnung in einer ersten Ausführungsform
a) in axialer Vorderansicht;
b) im Längsschnitt gemäß Schnittlinie A-A nach Darstellung 1a);
c) in axialer Rückansicht;
- Figur 2: ein Ölschöpfrad für ein Ölrückführelement aus Figur 1
a) in axialer Vorderansicht;
b) im Längsschnitt gemäß Schnittlinie A-A nach Darstellung 2a);
c) in axialer Rückansicht;
- Figur 3: eine erfindungsgemäße Lamellenkupplung in einer ersten Ausführungsform mit einer Ölschöpfanordnung gemäß den Figuren 1 und 2 in Explosionsdarstellung im Längsschnitt;
- Figur 4: die Lamellenkupplung gemäß Figur 3 in fertig montiertem Zustand im Längsschnitt;
- Figur 5: die Lamellenkupplung aus Figur 4 mit eingezeichnetem Verlauf des Ölflusses;
- Figur 6: ein Ölrückführelement einer erfindungsgemäßen Ölschöpfanordnung in einer zweiten Ausführungsform
a) in axialer Rückansicht;
b) im Längsschnitt gemäß Schnittlinie A-A nach Darstellung 6a);
c) im Querschnitt gemäß Schnittlinie B-B nach Darstellung 6b);
- Figur 7: ein Ölschöpfrad für ein Ölrückführelement nach Figur 6
a) im Querschnitt;
b) im Längsschnitt;
- Figur 8: eine erfindungsgemäße Lamellenkupplung in einer zweiten Ausführungsform mit einer Ölschöpfanordnung gemäß den Figuren 6 und 7 im Längsschnitt;
- Figur 9: die Lamellenkupplung aus Figur 8 mit eingezeichnetem Verlauf des Ölflusses;

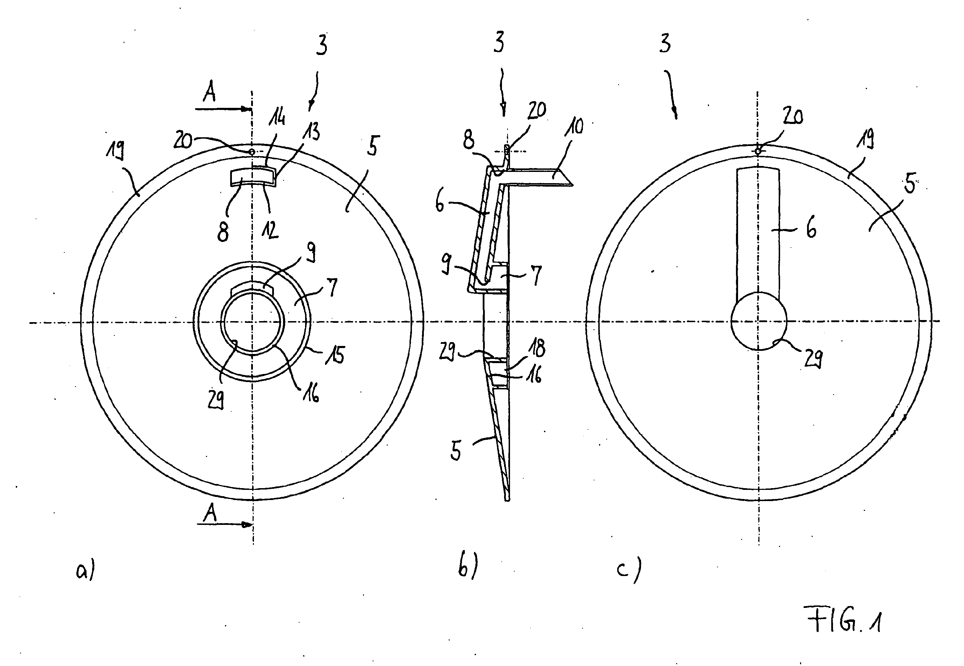

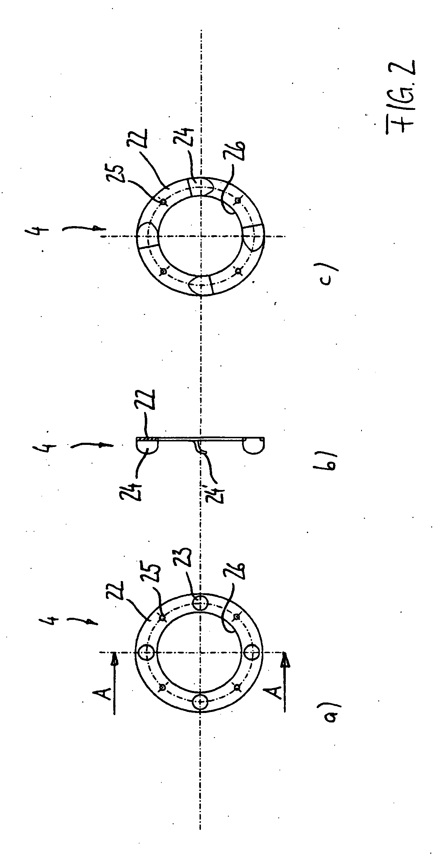

Die Figuren 1 und 2 werden im folgenden gemeinsam beschrieben. Sie zeigen eine zweiteilige Ölschöpfanordnung 2, die ein Ölrückführelement 3 und ein hiermit zusammenwirkendes Ölschöpfrad 4 aufweist. Das Ölrückführelement 3 wird in ein hier nicht dargestelltes Gehäuse eingesetzt, in dem es ortsfest gehalten wird. Das Ölschöpfrad 4 ist an einem in dem Gehäuse drehbar gelagerten Maschinenbauteil anzubringen, mit dem es gemeinsam um eine Drehachse relativ zu dem stehenden Ölrückführelement 3 rotiert.

Das Ölrückführelement 3, das als Einzelheit in den Figuren 1a) bis 1c) dargestellt ist, umfaßt einen scheibenförmigen Grundkörper 5, einen auf dem Grundkörper 5 angebrachten und von radial außen nach radial innen verlaufenden Kanal 6 sowie einen radial innenliegenden Ringkanal 7, in den der Radialkanal 6 mündet. Der Grundkörper 5 ist in Form einer Konusscheibe gestaltet und hat in einem radial außenliegenden Umfangsabschnitt einen ersten axialen Durchbruch 8, der als Zutrittsöffnung zum Kanal 6 dient. Radial innen hat der Grundkörper 5 einen zweiten axialen Durchbruch 9, der als Verbindung des Kanals 6 mit dem Ringkanal 7 dient. Der Grundkörper 5 umfaßt weiter einen Abstreifer 10, der an die Konusscheibe angeformt ist und sich in axiale Richtung erstreckt. Der Abstreifer 10 dient dazu, an einer Außenfläche des rotierenden Maschinenbauteils anzuliegen, um bei Rotation des Maschinenbauteils in einer Vorzugsdrehrichtung Öl von der Außenfläche abzuschöpfen und in Richtung der Zutrittsöffnung 8 zu fördern. Hierfür ist der Abstreifer 10 im Querschnitt etwa C-Förmig gestaltet und hat einen inneren Wandungsabschnitt 12, der eine an den Radius der Außenfläche des Maschinenbauteils angepaßte Krümmung aufweist, eine Rückwand 13 und einen äußeren Wandungsabschnitt 14, der sich mit radialem Abstand zum inneren Wandungsabschnitt 12 erstreckt, und zwar etwa über dessen halbe Umfangserstreckung. Das freie axiale Ende des Abstreifers 10 ist gegenüber der Längsachse A abgeschrägt.

Es ist ersichtlich, daß die Zutrittsöffnung 8 und der Durchbruch 9 jeweils einen etwa rechteckigen Querschnitt haben, wobei die Gestalt der Zutrittsöffnung 8 an den Querschnitt des Abstreifers 10 angepaßt ist und innen von einer konkaven und außen von einer hierzu etwa parallelen konvexen Kante begrenzt ist. Die Zutrittsöffnung 8 hat eine ähnliche Kontur, deren innere konkave Kante an den Radius des Ringkanals 7 angepaßt ist. Der Ringkanal 7 hat - im Längsschnitt betrachtet - ein etwa C-förmiges Profil und umfaßt einen äußeren Ringsteg 15, einen hierzu koaxialen inneren Ringsteg 16 und einen Boden 17, der durch den Grundkörper 5 gebildet wird. Dabei ist die Zutrittsöffnung 8 in einem radial innenliegenden Abschnitt des Bodens 17, und zwar benachbart zum inneren Ringsteg 16 gebildet, damit einmal in den Ringkanal 7 gelangtes Öl aufgrund von Zentrifugalkräften nicht wieder in den Radialkanal 6 zurückfließen kann. Der Ringkanal 7 ist in axiale Richtung zum Maschinenbauteil hin offen, so daß das Öl von dem Ölschöpfrad 4 aus der so gebildeten Ringöffnung 18 in das Innere des Maschinenbauteils zu Kühl- und Schmierzwecken gefördert werden kann.

Der radiale Kanal 6 ist auf dem scheibenförmigen Grundkörper 5 angeordnet, wobei die dem Maschinenbauteil zugewandte Seitenwand des Kanals 6 durch die Oberfläche des Grundkörpers 5 gebildet ist. Der scheibenförmige Grundkörper 5 ist leicht konisch gestaltet, so daß der Kanal 6 axial benachbart zum Ringkanal 7 mündet, wobei die Zutrittsöffnung 8 und Ringöffnung 18 in einer gemeinsamen Ebene liegen. Radial außen hat der Grundkörper 5 einen Flanschabschnitt 19 zum axialen Abstützen gegen eine entsprechende radiale Schulter des Gehäuses. Zur Verdrehsicherung sind ist in dem Flanschabschnitt zumindest eine Bohrung 20 vorgesehen, in die eine hier nicht dargestellte Schraube eingesteckt und in eine entsprechende Gewindebohrung im Gehäuse eingedreht werden kann. Das Ölrückführelement 3 mit Abstreifer 10, Kanal 6 und Ringkanal 7 ist einteilig aus Kunststoff hergestellt, wobei andere Materialien nicht ausgeschlossen sind.

Das Ölschöpfrad 4, das als Einzelheit in den Figuren 2a) bis 2c) dargestellt ist, umfaßt eine Ringscheibe 22 mit umfangsverteilten Öffnungen 23 und axial abstehenden Flügeln 24, die jeweils benachbart zu den Öffnungen 23 angeordnet sind. Weiter sind umfangsverteilte Bohrungen 25 vorgesehen, die zur axialen Befestigung an dem hier nicht dargestellten Maschinenbauteil dienen. Es ist ersichtlich, daß die Flügel 24 in Radialansicht eine schaufelförmige Gestalt aufweisen, so daß sie bei Rotation um die Drehachse in einer Vorzugsdrehrichtung Öl in die zugehörige jeweils in Umfangsrichtung davorliegende Öffnung 23 fördern. In montiertem Zustand der Ölschöpfanordnung 2 greifen die umfangsverteilten Flügel 24 in den Ringkanal 7 des Ölrückführelements 3 ein, um das hier befindliche Öl in den Innenraum des Maschinenbauteils zu pumpen. Demnach entspricht der mittlere Durchmesser der Ringscheibe 22 etwa dem mittleren Durchmesser des Ringkanals 7. Weiter beträgt die radiale Breite der Ringscheibe 22 und der hierauf befestigten Flügel 24 etwa der radialen Breite des Ringkanals 7, und die axiale Höhe der Flügel 24 entspricht etwa der axialen Tiefe des Ringkanals 7, so daß insgesamt ein möglichst größer Ölvolumenstrom aus dem Ringkanal 7 in das Innere des Maschinenbauteils gefördert werden kann. Die Ringscheibe 22 hat eine zentrale Bohrung 26, durch die eine hier nicht dargestellte und mit dem Maschinenbauteil zu verbindende Antriebswelle hindurchtreten kann.

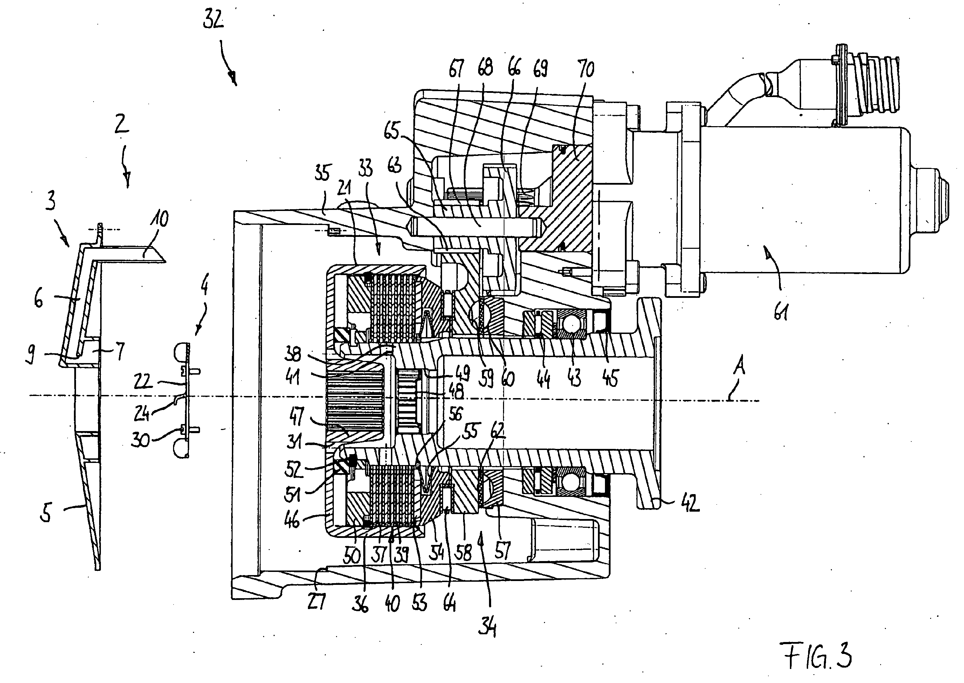

Die Figuren 3 bis 5, die im folgenden gemeinsam beschrieben werden, zeigen eine Kupplungsanordnung 32, die neben der in den Figuren 1 und 2 gezeigten Ölschöpfanordnung 2 eine Lamellenkupplung 33 als Maschinenbauteil, ferner eine Axialverstellvorrichtung 34 zum Betätigen der Lamellenkupplung 33 sowie einen Elektromotor 61 zum Ansteuern der Axialverstellvorrichtung 34 aufweist. Die Kupplungsanordnung 32 umfaßt weiter ein Gehäuse 35, in dem die vorstehend genannten Bauteile aufgenommen bzw. an diesem angebracht sind.

Die Lamellenkupplung 33 umfaßt zwei relativ zueinander um die Drehachse A drehbare Teile, nämlich einen Außenlamellenträger 36, in dem Außenlamellen 37 drehfest und axial beweglich aufgenommen sind, und einen Innenlamellenträger 38, an dem Innenlamellen 39 drehfest und axial beweglich gehalten sind. Die Außenlamellen 37 und die Innenlamellen 39 sind axial abwechselnd zueinander angeordnet und bilden gemeinsam ein Lamellenpaket 40. Der Innenlamellenträger 38 ist in Form einer Hohlwelle gestaltet, die an ihrem freien Ende einen Flansch 42 zum Anschließen an einen nicht dargestellten Antriebsstrang aufweist. Im Bereich des Lamellenpakets 40 sind mehrere radiale Durchbrüche 41 in der Hohlwelle vorgesehen, durch die in den Innenraum der Lamellenkupplung 33 gefördertes Kühlöl zu den Kupplungslamellen 37, 39 gelangen kann. Der Innenlamellenträger 38 ist gegenüber dem Gehäuse 35 mittels eines Radiallagers 43 um die Drehachse A drehbar gelagert und mittels eines Axiallagers 44 gegenüber dem Gehäuse 35 axial abgestützt. Zum Abdichten sitzt ein Radialwellendichtring 45 zwischen dem Gehäuse 35 und dem Innenlamellenträger 38 ein. Der Außenlamellenträger 36 ist topfförmig gestaltet und umfaßt einen zylindrischen Mantelabschnitt, einen Boden 46 und eine Nabe 47 mit einer Innenverzahnung. In die Nabe 47 ist eine nicht dargestellte Anschlußwelle drehfest einzustecken, die mit ihrem freien Ende in einer mit Radiallager 48 bestückten Bohrung 49 des Innenlamellenträgers 38 zu lagern ist. Der Mantelabschnitt, der Boden 46 und die Nabe 47 sind einteilig gestaltet und bilden gemeinsam den Kupplungskorb der Lamellenkupplung 33. Das Lamellenpaket 40 ist an einer mit dem Innenlamellenträger 38 fest verbundenen Stützscheibe 50 axial abgestützt, die ihrerseits gegen einen in einer Ringnut des Innenlamellenträgers 38 einsitzenden Sicherungsring 52 axial abgestützt ist. Das Lamellenpaket 40 wird von einer Druckscheibe 53 axial beaufschlagt, die in einer entsprechenden Ausnehmung einer Druckplatte 54 gehalten ist. Zwischen der Druckplatte 54 und dem Innenlamellenträger 38 sind Federmittel 55 in Form von Tellerfedern wirksam, die die Druckplatte 54 und das Lamellenpaket 40 in axial entgegengesetzte Richtungen beaufschlagen, das heißt im Öffnungssinn der Lamellenkupplung 33 wirksam sind. Die Federmittel 55 sind gegen einen gegenüber dem Innenlamellenträger fixierten Sicherungsring 56 axial abgestützt. Zwischen dem Boden 46 des Außenlamellenträgers 36 und dem hierzu benachbarten Ende des Innenlamellenträgers 38 sitzt ein Dichtring 51 in Form eines Kunststoffrings ein, der verhindert, daß in den Kupplungskorb gefördertes Kühlöl an der Innenseite des Bodens nach radial außen fließt, ohne mit dem Lamellenpaket in Kontakt zu kommen. Eine weiterer Zweck des Kunststoffrings 51 ist es, den Außenlamellenträger 36 axial beabstandet vom Innenlamellenträger 38 zu halten.

Um die Lamellenkupplung 33 zu kühlen und zu schmieren, ist die Ölschöpfanordnung 2 vorgesehen, welche Öl aus dem im Gehäuse 35 befindlichen Ölsumpf in das Innere der Lamellenkupplung 33 fördert. Es ist ersichtlich, daß das Ölrückführelement 3 mit seinem Flanschabschnitt 19 gegen eine radiale Schulter 27 des Gehäuses 35 axial abgestützt und mittels zumindest einer Schraubverbindung 28 an dem Gehäuse 35 fixiert. Dabei dient die Schraubverbindung 28 auch als Verdrehsicherung, so daß gewährleistet ist, daß der Abstreifer 10 stets im oberen Bereich des Gehäuses 35 gehalten ist und der Kanal 6 vertikal nach unten führt. Der Ringkanal 7 liegt koaxial zur Drehachse A der Lamellenkupplung 33 und bildet eine zentrale Bohrung 29, durch die die drehfest mit der Nabe 47 zu verbindende Welle hindurchtreten kann. Das Ölschöpfrad 4 ist mit seiner Ringscheibe 22 an dem Boden 46 des Außenlamellenträgers 36 befestigt, und zwar vorzugsweise verschraubt. Die Schrauben 30, die in Figur 3 ersichtlich sind, werden in Gewindebohrungen im Boden 46 eingedreht. Der Boden 46 und die Ringscheibe 22 weisen sich deckende axiale Öffnungen 23, 31 auf, damit das Kühlöl aus der Ringkammer 7 durch die Öffnungen 23, 31 in das Innere der Lamellenkupplung 33 gelangen kann, um das Lamellenpaket 40 zu kühlen und die drehenden Bauteile zu schmieren.

Es ist ersichtlich, daß das Ölrückführelement 3 so in dem Gehäuse 35 befestigt ist, daß der Abstreifer 10 parallel zur Längsachse A und damit entlang der Außenfläche des Außenlamellenträgers 36 ausgerichtet ist. Auf diese Weise wird erreicht, daß an der Oberfläche 21 des Außenlamellenträgers 36 nach dem Durchlaufen des Ölsumpfes haftendes Öl an dem Abstreifer 10 abgestreift und zur Zutrittsöffnung 8 in den Kanal 6 gelenkt wird. Um möglichst viel Öl in den Kanal 8 zu lenken, erstreckt sich der Abstreifer 10 in axiale Richtung über den größten Teil des Außenlamellenträgers 36. Für einen größtmöglichen Ölvolumenstrom ist weiter vorgesehen, daß das Ölrückführelement 3 so in dem Gehäuse 35 gehalten ist, daß der zwischen dem Abstreifer 10 und dem Außenlamellenträger 36 gebildete Radialspalt minimal ist. Allerdings soll ein berührender Kontakt zwischen dem Abstreifer 10 und der zylindrischen Außenfläche des Außenlamellenträgers 36 vermieden werden, um Reibungsverluste zu verhindern.

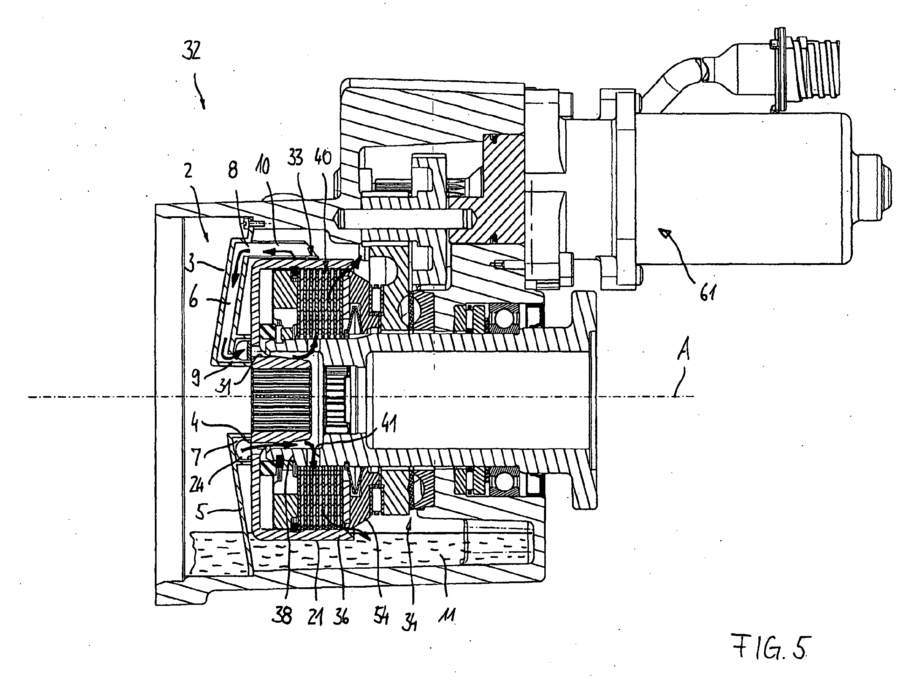

Der Verlauf des Kühlölstroms ist in Figur 5 anhand der eingezeichneten Pfeile dargestellt. Hieraus geht hervor, daß das Öl von dem Abstreifer 10 von der Oberfläche 21 des Außenlamellenträgers 36 abgestreift und durch die Zutrittsöffnung 8 in den Radialkanal 6 gefördert wird. Aufgrund der Schwerkraft fließt das Öl in dem Radialkanal 6 nach unten und gelangt durch die Verbindungsöffnung 9 in den Ringkanal 7. Von hier wird das Öl aufgrund der Drehung des Ölschöpfrads 4 mittels der Flügel 24 durch die Durchbrüche 31 in das Innere der Lamellenkupplung gepumpt. Hier fließt das Öl zunächst in axiale Richtung innerhalb des als Hohlwelle gestalteten Innenlamellenträgers 38 bis zu den radialen Durchbrüchen 41. Das Öl gelangt aufgrund der Zentrifugalkräfte durch die Durchbrüche 41 zum Lamellenpaket 40, wo es zwischen den Scheiben nach außen fließt und dabei Reibungswärme der Kupplungslamellen aufnimmt und abtransportiert. Radial außen strömt das Öl dann durch zwischen dem Außenlamellenträger 36 und der Druckplatte 54 gebildeten umlaufende Spalte aus dem Innenraum der Lamellenkupplung 33 in den im Innenraum des Gehäuses 35 gebildeten Ölsumpf 11. Durch die Rotation des Außenlamellenträgers 36 im Ölsumpf 11 bleibt ein Ölfilm an der Außenfläche haften, der nach oben transportiert und von dem Abstreifer 10 abgestreift wird. Hier beginnt der Kreislauf von vorn.

Die zur Betätigung der Lamellenkupplung 33 vorgesehene Axialverstellvorrichtung 34 ist in Form einer Kugelrampenanordnung gestaltet, wobei andere Betätigungsmechanismen, wie beispielsweise hydraulische Aktuatoren, ebenfalls denkbar sind.

Die Kugelrampenanordnung 34 umfaßt zwei relativ zueinander verdrehbare Scheiben, nämlich eine Stützscheibe 57 und eine Stellscheibe 58, von denen die Stützscheibe 57 gegenüber dem ortsfesten Gehäuse 35 axial abgestützt ist und von denen die Stellscheibe 58 axial verschiebbar ist. Die beiden Scheiben 57, 58 weisen in ihren einander zugewandten Stirnflächen mehrere umfangsverteilte Kugelrillen 59, 60 mit gegenläufigen Steigungen auf. Jeweils zwei einander gegenüberliegende Kugelrillen 59, 60, welche in Umfangsrichtung verlaufen, bilden ein Paar und nehmen jeweils eine Kugel auf, über die sich die Scheiben 57, 58 axial abstützen. Die Kugeln sind in einem axial zwischen den beiden Scheiben 57, 58 gehaltenen Käfig 62 in Umfangsrichtung zueinander gehalten. Vorliegend sind die Kugeln nicht sichtbar, da sie sich außerhalb der dargestellten Schnittebene befinden. Die Tiefe eines Paares von Kugelrillen 59, 60 ist über den Umfang veränderlich, so daß ein Verdrehen der Scheiben 57, 58 zueinander zu einer Axialverschiebung und somit einer Betätigung der Druckplatte 54 der Lamellenkupplung 33 führt. Vorliegend sitzt die Stützscheibe 57 in einer Ausnehmung des Gehäuses 35 verdrehgesichert ein. Die Stellscheibe 58 ist über die in den Kugelrillen einsitzenden Kugeln gegenüber der Stützscheibe 57 radial gelagert und über ein Zahnsegment 63 um die Drehachse A drehend antreibbar. Axial zwischen der Stellscheibe 58 und der Druckplatte 54 ist ein Axiallager 64 zwischengeschaltet, das eine Übertragung der Axialkräfte unter gleichzeitiger Relativdrehbewegung ermöglicht.

Bei vollständig geöffneter Reibungskupplung befinden sich die beiden Scheiben 57, 58 in der zueinander nächstmöglichen Position. Bei entsprechender Verdrehung der Stellscheibe 58 laufen die Kugeln in den Kugelrillen 12, 13 in Bereiche geringerer Tiefe. So findet zwischen den Scheiben 57, 58 eine Spreizung statt, wobei die Stellscheibe 58 axial in Richtung zum Lamellenpaket 40 verschoben wird und dieses über das Axiallager 64 und die Druckplatte 54 beaufschlagt. Entsprechend der Verdrehung der Stellscheibe 58 wird die Lamellenkupplung 33 in einem vorbestimmten Maße gesperrt, und es erfolgt eine Ankopplung des Außenlamellenträgers 36 an den Innenlamellenträger 38. Die als Tellerfedern gestalteten Federmittel 55 bewirken, daß die Stellscheibe 58 bei unbetätigtem Elektromotor 61 wieder in ihre Ausgangsposition in Richtung Stützscheibe 57 verschoben wird.

Die Kugelrampenanordnung 34 ist über eine Untersetzungsstufe von dem Elektromotor 61 antreibbar, der an das Gehäuse 35 angeflanscht ist. Die Untersetzungsstufe umfaßt ein Ritzel 65 mit zwei Stimverzahnungen 66, 67, das auf einem Bolzen 68 parallel zur Drehachse A drehbar gelagert ist. Die Stirnverzahnung 66 größeren Durchmessers ist mit der Antriebswelle 69 des Elektromotors 61 in Verzahnungseingriff, während die Stirnverzahnung 67 kleineren Durchmessers mit dem Zahnsegment 63 der Stellscheibe 58 kämmt. Der Bolzen 68 sitzt mit einem Ende in einer Bohrung des Gehäuses 35 ein und ist mit seinem zweiten Ende in einem in das Gehäuse 35 eingesetzten Deckel 70 gehalten. Der Deckel 70 sitzt in einer Bohrung des Gehäuses 35 dichtend ein.

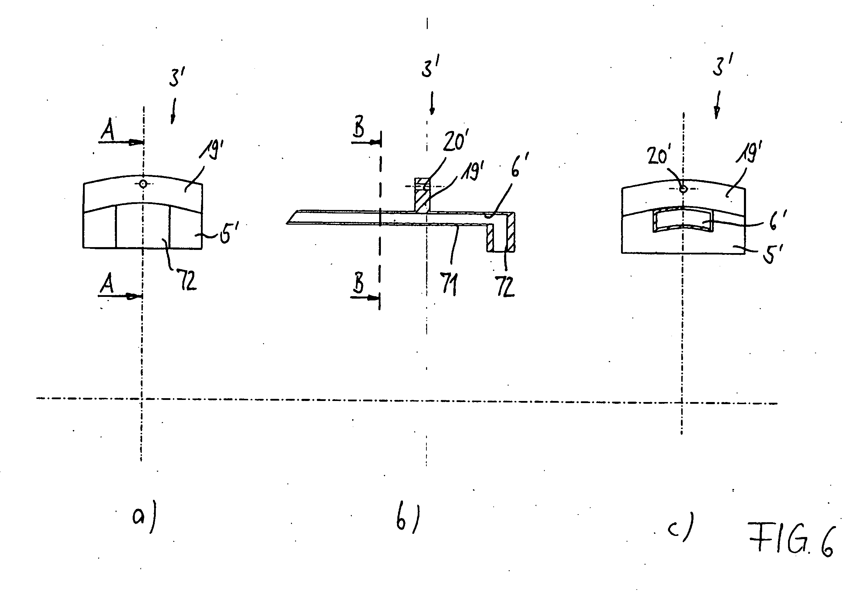

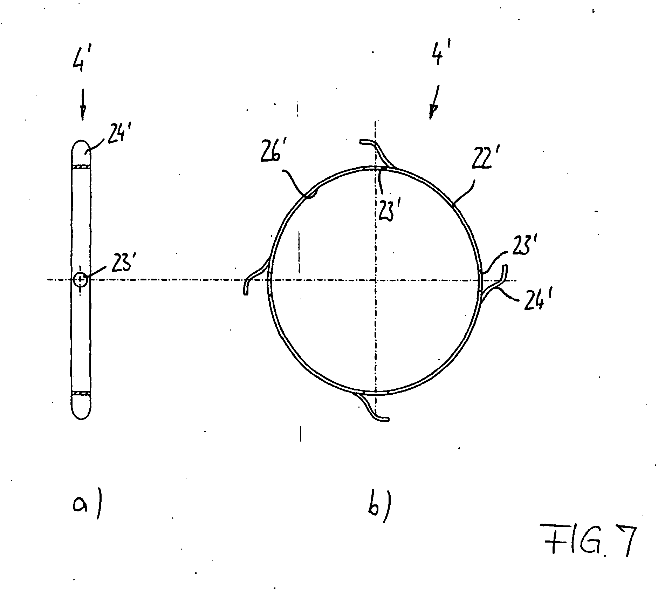

Im folgenden werden die Figuren 6 und 7 gemeinsam beschrieben. Der Aufbau der hier gezeigten Ölschöpfeinheit 2' ähnelt derjenigen aus den Figuren 1 und 2, so daß hinsichtlich der Gemeinsamkeiten auf obige Beschreibung Bezug genommen wird. Vorliegend sind gleiche bzw. einander entsprechende Bauteile mit um eins gestrichenen Bezugszeichen versehen.

Das in Figur 6 gezeigte Ölrückführelement 3' bildet zusammen mit dem in Figur 7 gezeigten Ölschöpfrad 4' gemeinsam die Ölschöpfeinheit 2'. Es ist ersichtlich, daß das Ölrückführelement 3' auf seine Funktionsbauteile beschränkt ist. Es umfaßt einen sich in axiale Richtung erstreckenden Abstreifer 10', der ein im Querschnitt betrachtet ein C-förmiges Profil aufweist, einen hieran anschließenden rohrförmigen Kanal 6' sowie an seiner Oberseite ein Befestigungselement 19'. Das Befestigungselement 19' ist in Form eines radialen Ansatzes gestaltet, der gegen eine Schulter im Gehäuse zur Anlage zu bringen ist und gegenüber dieser mittels einer Schraubverbindung zu befestigen ist. Der rohrförmige Kanal 6' hat im unmittelbaren Anschluß an den Abstreifer 10' zunächst einen sich in axialer Richtung erstreckenden ersten Kanalabschnitt 71, der in einen radial verlaufenden zweiten Kanalabschnitt 72 übergeht. Dabei dient der zweite Kanalabschnitt 72 zum Anschließen an einen hier nicht dargestellten Verbindungskanal. Die Rückwand des zweiten Kanalabschnitts 72 ist durch einen Grundkörper 5' gebildet, der radial innen eine Abflachung zur Verdrehsicherung gegenüber einem hier nicht dargestellten Gehäuse aufweist.

Das Ölschöpfrad 4', das als Einzelheit in den Figuren 7a und 7b dargestellt ist, umfaßt eine Ringscheibe 22' mit mehreren umfangsverteilten Öffnungen 23' und von der Ringscheibe 22' radial abstehende Flügel 24', die jeweils in Umfangsrichtung benachbart zu den Öffnungen 23' angeordnet sind. Es ist ersichtlich, daß die Flügel 24' in Radialansicht eine schaufelförmige Gestalt aufweisen, so daß sie bei Rotation um die Drehachse in einer Vorzugsdrehrichtung Öl in die jeweils in Umfangsrichtung davorliegende Öffnung 23' nach radial innen fördern. Die Ringscheibe 22' hat eine zentrale Bohrung 26', so daß sie auf ein drehendes Maschinenbauteil, insbesondere einen Innenlamellenträger, aufgeschoben werden kann. Dabei kann die Befestigung an dem Maschinenbauteil beispielsweise mittels einer Preßpassung oder Schraubverbindungen hergestellt werden.

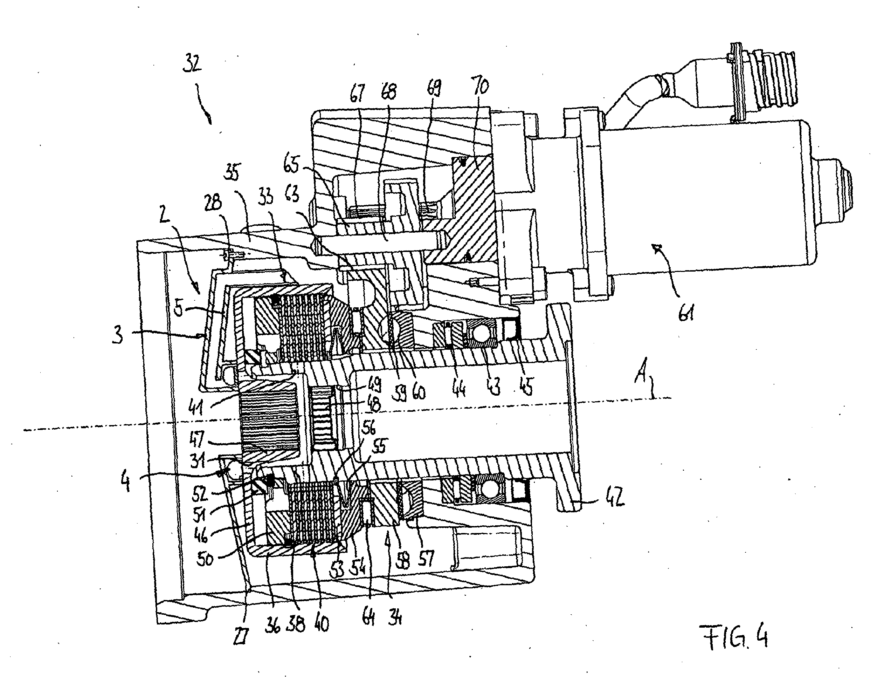

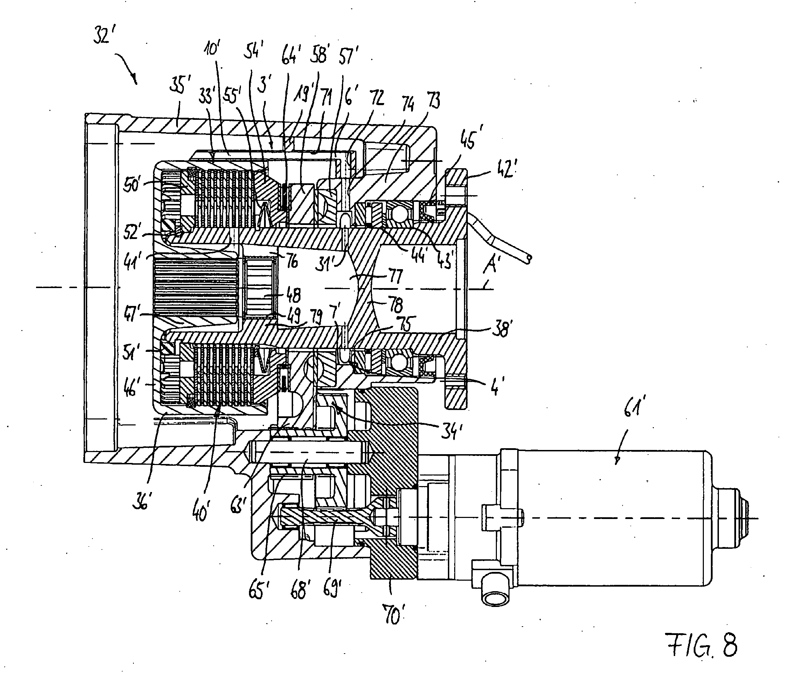

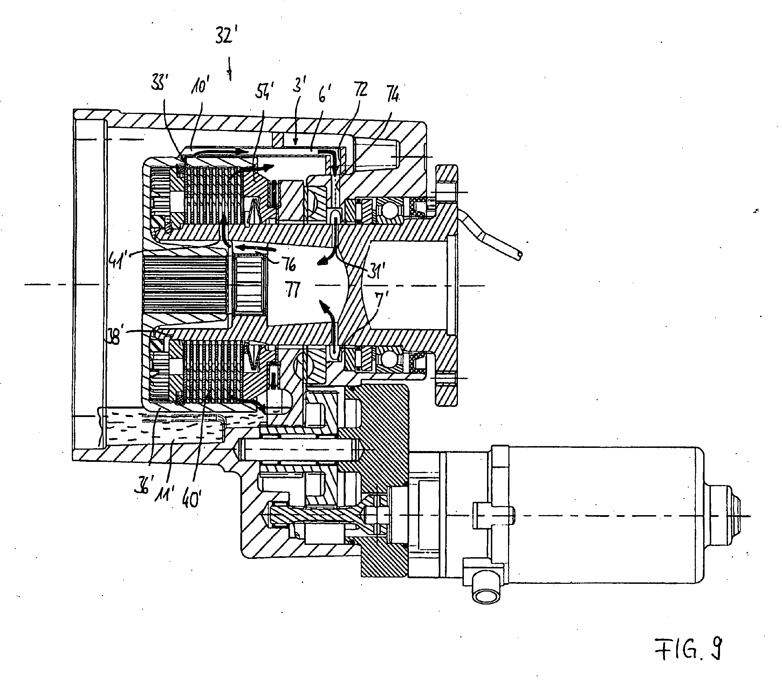

Im folgenden werden die Figuren 8 und 9 gemeinsam beschrieben. Diese zeigen eine erfindungsgemäße Kupplungsanordnung 32' in einer zweiten Ausführungsform, die derjenigen aus den Figuren 4 und 5 weitgehend entspricht. Insofern wird hinsichtlich der Gemeinsamkeiten auf obige Beschreibung verwiesen, wobei gleiche bzw. einander entsprechende Bauteile mit um eins gestrichenen Bezugszeichen versehen sind. Im folgenden wird primär auf die Unterschiede eingegangen.

Vorliegend ist der Längsschnitt durch die Kupplung 32' so gewählt, daß der Elektromotor 61' in der unteren Bildhälfte zu sehen ist, wobei Aufbau und Funktionsweise identisch zu derjenigen aus Figur 4 sind. Es ist erkennbar, daß die vorliegende Kupplungsanordnung 32' eine Ölschöpfanordnung 2' gemäß den Figuren 6 und 7 zum Kühlen und zum Schmieren der Lamellenkupplung 33' beinhaltet, die Öl aus dem im Gehäuse 35' befindlichen Ölsumpf in das Innere der Lamellenkupplung 33' fördert. Das Ölrückführelement 3' ist mit seinem Befestigungsabschnitt 19' gegen eine hier nicht dargestellte radiale Schulter des Gehäuses 35' axial abgestützt und mittels Schrauben gegenüber diesem fixiert. Dabei ist der Grundkörper 5' bzw. der zweite Kanalabschnitt 72 mit einem zur Drehachse A' koaxialen Hülsenansatz 73 des Gehäuses 35' in Anlagekontakt. Der abgeflachte Grundkörper 5' dient zur Verdrehsicherung des Ölrückführelementes 3' gegenüber dem Hülsenansatz 73, so daß gewährleistet ist, daß der Abstreifer 10' in einer definierten Position im oberen Bereich des Außenlamellenträger 36' an dessen Außenfläche 21' anliegt. Der Kanal 6' des Ölrückführelementes 3' mündet in einen im Hülsenansatz von radial außen nach radial innen verlaufenden Verbindungskanal 74, der wiederum in einen radial innen offenen Ringkanal 7' mündet. Dabei ist der Verbindungskanal 74 in etwa vertikal ausgerichtet, so daß hierin einströmendes Öl aufgrund der Schwerkraft nach radial innen in Richtung zum Ringkanal 7' fließen kann. Der Ringkanal 7' ist in einer zylindrischen Innenfläche 75 des Hülsenansatzes 73 ausgebildet und liegt axial zwischen dem Axiallager 44 und der Stützscheibe 57'. Dabei bildet die radiale Anlagefläche der Stützscheibe 57', mit der diese gegenüber dem Gehäuse 35' axial abgestützt ist, die Seitenwandung des Ringkanals 7'.

Der Innenlamellenträger 38' ist weitestgehend in Form einer Hohlwelle gestaltet, an deren kupplungsseitigem ersten Ende die Innenlamellen 39' drehfest angebracht sind, und an deren entgegengesetztem zweiten Ende ein Flansch 42' zum Anschließen an einen nicht dargestellten Antriebsstranges vorgesehen ist. Im axialen Überdeckungsbereich mit dem Ringkanal 7' hat der Innenlamellenträger mehrere über den Umfang verteilte radiale erste Durchbrüche 31', die in einen in dem hülsenförmigen Innenlamellenträger 38 gebildeten Hohlraum 77 münden. Der Hohlraum 77 wird durch einen Steg 78 in Richtung zum Flansch 42' axial geschlossen. Im Bereich des Lamellenpaketes 40' sind mehrere radiale zweite Durchbrüche 41 in dem Innenlamellenträger 38 vorgesehen, durch die das in den Hohlraum 77 geförderte Kühlöl zu den Kupplungslamellen 37', 39' gelangen kann. Es ist ersichtlich, daß sich der Hohlraum 77 vom Eintrittsbereich der ersten Durchbrüche 31' in Richtung zu den zweiten Durchbrüchen 41' konusförmig öffnet. Durch diese Ausgestaltung wird erreicht, daß das in den Hohlraum 77 durch die Durchbrüche 31' gelangte Öl bei Drehung des Innenlamellenträgers 38' aufgrund von Zentrifugalkräften in Richtung zu den zweiten Durchbrüchen 41' fließt. In einem zur Nabe 47' axial benachbarten Bereich hat der Innenlamellenträger 38' einen Lagerabsatz 79, in dem die mit der Nabe 47' drehfest verbundene Welle mittels eines Lagers 48' auf der Drehachse A drehbar zu lagern ist. Damit das in dem Hohlraum 77 befindliche Öl in Richtung zu den zweiten Durchbrüchen 41' fließen kann, hat der Lagerabsatz 79 zumindest einen axial verlaufenden Durchtrittskanal 76.

Der Verlauf des Kühlölstromes ist in Figur 9 anhand der eingezeichneten Pfeile dargestellt. Es ist ersichtlich, daß das Öl von dem Abstreifer 10' von der Oberfläche 21' des Außenlamellenträgers 36' abgestreift und in den Kanal 6' gefördert wird. Dieser mündet in den im Gehäuse 35' ausgebildeten Verbindungskanal 74, wo das Öl aufgrund der Schwerkraft nach unten fließt und in den Ringkanal 7' gelangt. Von hier wird das Öl aufgrund der Drehung des mit dem Innenlamellenträgers 38 verbundenen Ölschöpfrades mittels der Flügel 24' durch die Durchbrüche 31' in das Innere des Innenlamellenträgers 38' gepumpt. Dabei erfolgt der Fördervorgang in radialer Richtung. Es ist jedoch auch eine Anordnung denkbar, bei der der Innenlamellenträger und das Gehäuse so gestaltet sind, daß eine Förderung mittels des Ölschöpfrads in axialer Richtung erfolgen kann. Innerhalb des Innenlamellenträgers 38' fließt das Öl in axialer Richtung bis zu den radialen zweiten Durchbrüchen 41'. Das Öl gelangt aufgrund der Zentrifugalkräfte durch die zweiten Durchbrüche 41' zum Lamellenpaket 40', wo es zwischen den Scheiben nach außen fließt und dabei Reibungswärme der Kupplungslamellen aufnimmt und abtransportiert. Radial außen strömt das Öl dann durch zwischen dem Außenlamellenträger 36' und der Druckplatte 54' gebildete umlaufende Spalte aus dem Innenraum der Lamellenkupplung 33' in den im Innenraum des Gehäuses 35' gebildeten Ölsumpf 11'. Durch die Rotation des Außenlamellenträgers 36' im Ölsumpf 11' bleibt ein Ölfilm an der Außenfläche 21' haften, der nach oben transportiert und von dem Abstreifer 10' abgestreift wird. Hier beginnt der Kreislauf von vorne.

### Bezugszeichenliste

- 2: Ölschöpfanordnung
- 3: Ölrückführelement
- 4: Ölschöpfrad
- 5: Grundkörper
- 6: Kanal
- 7: Ringkanal
- 8: Durchbruch
- 9: Durchbruch
- 10: Abstreifer
- 11: Ölsumpf
- 12: Wandungsabschnitt
- 13: Rückwand
- 14: Wandungsabschnitt
- 15: äußerer Ringsteg
- 16: innerer Ringsteg
- 17: Boden
- 18: Ringöffnung
- 19: Flanschabschnitt
- 20: Bohrung
- 21: Außenfläche
- 22: Ringscheibe
- 23: Öffnung
- 24: Flügel
- 25: Bohrung
- 26: Bohrung
- 27: Schulter
- 28: Schraubverbindung
- 29: Bohrung
- 30: Schraube
- 31: Öffnung
- 32: Kupplungsanordnung
- 33: Lammellenkupplung
- 34: Axialverstellvorrichtung
- 35: Gehäuse
- 36: Außenlammellenträger
- 37: Außenlamellen
- 38: Innenlamellenträger
- 39: Innenlamellen
- 40: Lammellenpaket
- 41: Durchbruch
- 42: Flansch
- 43: Radiallager
- 44: Axiallager
- 45: Wellendichtring
- 46: Boden
- 47: Nabe
- 48: Radiallager
- 49: Bohrung
- 50: Stützscheibe
- 51: Dichtring
- 52: Sicherungsring
- 53: Druckscheibe
- 54: Druckplatte
- 55: Federmittel
- 56: Sicherungsring
- 57: Stützscheibe
- 58: Stellscheibe
- 59: Kugelrille
- 60: Kugelrille
- 61: Elektromotor
- 62: Käfig
- 63: Zahnsegment
- 64: Axiallager
- 65: Ritzel
- 66: Stirnverzahnung
- 67: Stirnverzahnung
- 68: Bolzen
- 69: Antriebswelle
- 70: Deckel
- 71: erster Kanalabschnitt
- 72: zweiter Kanalabschnitt
- 73: Hülsenansatz
- 74: Verbindungskanal
- 75: Innenfläche
- 76: Durchtrittskanal
- 77: Hohlraum
- 78: Steg
- 79: Lagerabsatz

- A: Drehachse

## Patentansprüche

1. Ölschöpfanordnung zur Verwendung in einem stehenden Gehäuse mit darin relativ zueinander um eine Drehachse drehbaren Maschinenbauteilen, umfassend
ein mit dem Gehäuse verbindbares Ölrückführelement (3), das einen Abstreifer (10) zum Anliegen an einer Außenfläche (21) eines der Maschinenbauteile aufweist;
zumindest einen Kanal (6), der vom Abstreifer (10) mit Öl versorgt wird und der in einen zur Drehachse (A) koaxialen Ringkanal (7) mündet; und
ein mit einem der Maschinenbauteile verbindbares Ölschöpfrad (4) mit mehreren um die Drehachse (A) verteilten Flügeln (24), die in den Ringkanal (7) eintauchen und bei Drehung des Ölschöpfrads (4) relativ zum Ölrückführelement (3) Öl aus dem Ringkanal (7) fördern.

2. Ölschöpfanordnung nach Anspruch 1,
**dadurch gekennzeichnet,**
**daß** das Ölschöpfrad (4) mit demselben Maschinenbauteil verbindbar ist, an dessen Außenfläche (21) der Abstreifer (10) des Ölrückführelements (3) anliegt.

3. Ölschöpfanordnung nach Anspruch 2,
**dadurch gekennzeichnet,**
**daß** der Abstreifer (10), der Kanal (6) und der Ringkanal (7) einteilig hergestellt sind und gemeinsam das Ölrückführelement (3) bilden.

4. Ölschöpfanordnung nach Anspruch 2 oder 3,
**dadurch gekennzeichnet,**
**daß** der Kanal (6) vom Abstreifer (10) zum Ringkanal (7) im wesentlichen radial verläuft.

5. Ölschöpfanordnung nach einem der Ansprüche 2 bis 4,
**dadurch gekennzeichnet,**
**daß** der Ringkanal (7) im Längsschnitt betrachtet ein etwa C-förmiges Profil aufweist, das seitlich geöffnet ist.

6. Ölschöpfanordnung nach einem der Ansprüche 2 bis 5,
**dadurch gekennzeichnet,**
**daß** das Ölrückführelement (3) einen Grundkörper (5) aufweist, an dem der Kanal (6) und der Ringkanal (7) angeordnet sind.

7. Ölschöpfanordnung nach Anspruch 6,
**dadurch gekennzeichnet,**
**daß** der Grundkörper (5) scheibenförmig gestaltet ist und einen den Kanal (6) mit dem Ringkanal (7) verbindenden Durchbruch (9) aufweist.

8. Ölschöpfanordnung nach einem der Ansprüche 2 bis 7,
**dadurch gekennzeichnet,**
**daß** das Ölschöpfrad (4) einen Ring (22) mit axialen Durchbrüchen (23) umfaßt, wobei die Flügel (24) in Umfangsrichtung benachbart zu den Durchbrüchen (23) von dem Ring schaufelartig abstehen, um bei Rotation des Maschinenbauteils (33) in einer Vorzugsdrehrichtung Öl durch die Durchbrüche (23) zu fördern.

9. Ölschöpfanordnung nach Anspruch 1,
**dadurch gekennzeichnet,**
**daß** das Ölschöpfrad (4') mit einem anderen Maschinenbauteil als dem Maschinenbauteil, an dem das Ölrückführelement (3') mit seinem Abstreifer (10') anliegt, verbindbar ist.

10. Ölschöpfanordnung nach Anspruch 9,
**dadurch gekennzeichnet,**
**daß** der Abstreifer (10') und der Kanal (6') einteilig hergestellt sind und gemeinsam das Ölrückführelement (3') bilden.

11. Ölschöpfanordnung nach Anspruch 9,
**dadurch gekennzeichnet,**
**daß** das Ölrückführelement (3') mit seinem Kanal (6') an einen im Gehäuse (35') ausgebildeten Verbindungskanal (74) angeschlossen ist, der in den Ringkanal (7') mündet.

12. Ölschöpfanordnung nach einem der Ansprüche 9 bis 11,
**dadurch gekennzeichnet,**
**daß** der Ringkanal (7') im Gehäuse (35') nach radial innen geöffnet ist.

13. Ölschöpfanordnung nach einem der Ansprüche 9 bis 12,
**dadurch gekennzeichnet,**
**daß** das Ölschöpfrad (4') einen Ring (22') mit radialen Durchbrüchen (23') umfaßt, wobei die Flügel (24') in Umfangsrichtung benachbart zu den Durchbrüchen (23') von dem Ring schaufelartig abstehen, um bei Rotation in einer Vorzugsdrehrichtung Öl durch die Durchbrüche (23') nach radial innen zu fördern.

14. Ölschöpfanordnung nach einem der Ansprüche 1 bis 13,
**dadurch gekennzeichnet,**
**daß** der Abstreifer (10) im Querschnitt ein etwa C-förmiges Profil aufweist.

15. Lamellenkupplung (33) mit einer Ölschöpfanordnung (2), umfassend
einen um eine Drehachse (A) drehbaren, in einem Ölsumpf laufenden Außenlamellenträger (36) mit Außenlamellen (38);
einen relativ zum Außenlamellenträger (36) in einem Gehäuse (35) um die Drehachse (A) drehbar gelagerten Innenlamellenträger (38) mit Innenlamellen (39), wobei die Innenlamellen (39) und die Außenlamellen (38) axial abwechselnd angeordnet sind und ein Lamellenpaket (40) bilden;
ein an einen der beiden Lamellenträger (36, 38) angeformtes Bodenteil (46) mit mehreren umfangsverteilten axialen Durchbrüchen (31), das einen zwischen den beiden Lamellenträgern (36, 38) gebildeten ringförmigen Kupplungsraum begrenzt;
ein mit dem Gehäuse (35) fest verbundenes Ölrückführelement (3), das einen oberhalb des Ölsumpfes an einer Außenfläche des Außenlamellenträgers (38) anliegenden Abstreifer (10), einen mit dem Abstreifer verbundenen Kanal (6) und einen mit dem Kanal (6) verbundenen zur Drehachse (A) koaxialen Ringkanal (7) aufweist; und
ein mit dem Bodenteil (46) verbundenes Ölschöpfrad (4) mit mehreren in Umfangsrichtung verteilten, im Bereich der Durchbrüche (31) angeordneten Flügeln (24), die in den Ringkanal (7) eintauchen und bei Drehung des Bodenteils (46) relativ zum Gehäuse (35) Öl aus dem Ringkanal (7) durch die Durchbrüche (31) in den Kupplungsraum fördern.

16. Lamellenkupplung nach Anspruch 15,
**dadurch gekennzeichnet,**
**daß** das Ölrückführelement (3) derart im Gehäuse (35) angeordnet ist, daß der Kanal (6) etwa vertikal ausgerichtet ist.

17. Lamellenkupplung nach Anspruch 15 oder 16,
**dadurch gekennzeichnet,**
**daß** das Bodenteil (46) und der Außenlamellenträger (36) einteilig gestaltet sind, wobei radial innen an das Bodenteil (46) eine Nabe (47) angeformt ist, in die eine Welle drehfest eingesteckt werden kann.

18. Lamellenkupplung nach Anspruch 17,
**dadurch gekennzeichnet,**
**daß** der Innenlamellenträger (38) hülsenförmig gestaltet ist und im Bereich des Lamellenpakets (40) radiale Durchbrüche (41) aufweist, wobei die Nabe (47) in den Innenlamellenträger (38) axial eintaucht.

19. Lamellenkupplung (33') mit einer Ölschöpfanordnung (2'), umfassend
ein Gehäuse (35') mit einem Hülsenansatz (73), in dem radial innen ein zu einer Drehachse (A') koaxialer Ringkanal (7') gebildet ist;
einen im Gehäuse (35') um die Drehachse (A') drehbar gelagerten Innenlamellenträger (38') mit Innenlamellen (39'), wobei der Innenlamellenträger (38') hülsenförmig gestaltet ist und im Bereich des Ringkanals (7') mehrere umfangsverteilte radiale Durchbrüche (31') aufweist;
einen relativ zum Innenlamellenträger (38') um die Drehachse (A') drehbar gelagerten, in einem Ölsumpf laufenden Außenlamellenträger (36') mit Außenlamellen (38'), wobei die Innenlamellen (39') und die Außenlamellen (38') axial abwechselnd angeordnet sind und ein Lamellenpaket (40') bilden;
ein mit dem Gehäuse (35') fest verbundenes Ölrückführelement (3'), das einen oberhalb des Ölsumpfes an einer Außenfläche (21') des Außenlamellenträgers (38') anliegenden Abstreifer (10') und einen mit dem Abstreifer (10') verbundenen Kanal (6') aufweist, der mit dem Ringkanal (7') zur Ölversorgung verbunden ist;
ein mit dem Innenlamellenträger (38') verbundenes Ölschöpfrad (4') mit mehreren umfangsverteilten Flügeln (24'), die im Bereich der Durchbrüche (31') angeordnet sind und in den Ringkanal (7') eintauchen und bei Drehung des Innenlamellenträgers (38') relativ zum Gehäuse (35') Öl aus dem Ringkanal (7') durch die Durchbrüche (31') in den Kupplungsraum fördern.

20. Lamellenkupplung nach Anspruch 19,
**dadurch gekennzeichnet,**
**daß** der Hülsenansatz (73) einen Verbindungskanal (74) mit einer außenliegenden Eintrittsöffnung, in die der Kanal (6') mündet, und einer innenliegenden Austrittsöffnung, die in den Ringkanal (7') mündet, aufweist.

21. Lamellenkupplung nach Anspruch 19 oder 20,
**dadurch gekennzeichnet,**
**daß** der Verbindungskanal (74) im Einbauzustand der Lamellenkupplung etwa vertikal ausgerichtet ist.

22. Lamellenkupplung nach einem der Ansprüche 19 bis 21,
**dadurch gekennzeichnet,**
**daß** der Innenlamellenträger (38') im Bereich des Lamellenpaketes (40') radiale Durchbrüche (41') aufweist.

## Claims

1. Oil scoop assembly for using in a stationary housing with machine parts rotatable therein relative to each other around a rotational axis, comprising
an oil return element (3), connectable to the housing and having a wiper (10) for abutting an outer face (21) of one of the machine parts;
at least one channel (6), which is supplied with oil by the wiper (10) and which ends in an annular channel (7) extending coaxially to the rotational axis (A), and
an oil scoop wheel (4), connectable to one of the machine parts, with a plurality of blades (24), distributed around the rotational axis (A) and which extend into the annular channel (7) and, when the oil scoop wheel (4) rotates relative to the oil return element (3), delivers oil from the annular channel (7).

2. Oil scoop assembly according to claim 1,
**characterised in**
**that** the oil scoop wheel (4) is connectable to the same machine part, which outer face (21) is abutted by the wiper (10) of the oil return element (3).

3. Oil scoop assembly according to claim 2,
**characterised in**
**that** the wiper (10), the channel (6) and the annular channel (7) form one piece and form together the oil return element (3).

4. Oil scoop assembly according to claim 2 or 3,
**characterised in**
**that** the channel (6) from the wiper (10) to the annular channel (7) extends generally radially.

5. Oil scoop assembly according to one of claims 2 to 4,
**characterised in**
**that** the annular channel (7), when seen in a longitudinal sectional view, has an approximately C-like profile, which is laterally open.

6. Oil scoop assembly according to one of claims 2 to 5,
**characterised in**
**that** the oil return element (3) has a base body (5), on which the channel (6) and the annular channel (7) are arranged.

7. Oil scoop assembly according to claim 6,
**characterised in**
**that** the base body (5) is formed disc-like and has a through opening (9) connecting the channel (6) with the annular channel (7).

8. Oil scoop assembly according to one of claims 2 to 7,
**characterised in**
**that** the oil scoop wheel (4) comprises a ring (22) with axial through openings (23), wherein the blades (24) are arranged in circumferential direction neighbouring the through openings (23) and project from the ring blade-like, to deliver oil through the through openings (23), when the machine part (44) rotates in a preferred rotational direction.

9. Oil scoop assembly according to claim 1,
**characterised in**
**that** the oil scoop wheel (4') is connectable to a different machine part than the machine part, which the oil return element (3') abuts with its wiper (10').

10. Oil scoop assembly according to claim 9,
**characterised in**
**that** the wiper (10') and the channel (6') are formed integrally and form together the oil return element (3').

11. Oil scoop assembly according to claim 9,
**characterised in**
**that** the oil return element (3'), with its channel (6'), is connected to a connection channel (74), formed in the housing (35') and ending in the annular channel (7').

12. Oil scoop assembly according to one of claims 9 to 11,
**characterised in**
**that** the annular channel (7') in the housing (35') is opened radially inwardly.

13. Oil scoop assembly according to one of claims 9 to 12,
**characterised in**
**that** the oil scoop wheel (4') comprises a ring (22') with radial through openings (23'), wherein the blades (24') are arranged in circumferential direction neighbouring the through openings (23') and project from the ring blade-like, to deliver, when rotating in a preferred rotational direction, oil through the through openings (23') radially inwardly.

14. Oil scoop assembly according to one of claims 1 to 13,
**characterised in**
**that** the wiper (10) has, in cross-section, a generally C-like profile.

15. Multi-disc clutch (33) with an oil scoop assembly (2), comprising
an outer disc carrier (36) with outer discs (38), which outer disc carrier (36) being rotatable around a rotational axis (A) and running in an oil sump;
an inner disc carrier (38) with inner discs (39), which inner disc carrier (38) being rotatably held around the rotational axis (A) relative to the outer disc carrier (36) in a housing (35), wherein the inner discs (39) and the outer discs (38) are arranged axially alternatingly and form a disc set (40),
a bottom part (46), formed onto one of the two disc carriers (36, 38), having a plurality of several circumferentially distributed axial through openings (31), which bottom part (46) delimits a ring-like clutch chamber formed between the two disc carriers (36, 38),
an oil return element (3), connected to the housing (35), which has a wiper (10), abutting above the oil sump an outer face of the outer disc carrier (38), a channel (6) connected to the wiper (10) and an annular channel (7) connected to the channel (6) and extending coaxially to the rotational axis (A), and
an oil scoop wheel (4), connected to the bottom part (46), with a plurality of blades (24), distributed in circumferential direction and arranged in the area of the through openings (31) and which blades (24) enter the annular channel (7) and, when the bottom part (46) rotates relative to the housing (35), deliver oil from the annular channel (7) through the through openings (31) to the clutch chamber.

16. Multi-disc clutch according to claim 15,
**characterised in**
**that** the oil return element (3) is arranged in the housing (35) such, that the channel (6) is aligned generally vertically.

17. Multi-disc clutch according to claim 15 or 16,
**characterised in**
**that** the bottom part (46) and the outer disc carrier (36) form one part, wherein a hub (47) is formed onto a radial inner end of the bottom part (46), into which hub (47) a shaft can be inserted in a rotationally fixed way.

18. Multi-disc clutch according to claim 17,
**characterised in**
**that** the inner disc carrier (38) is formed sleeve-like and has in the area of the disc set (4) radial through openings (41), wherein the hub (47) extends axially into the inner disc carrier (38).

19. Multi-disc clutch (33') with an oil scoop assembly (2'), comprising
a housing with a sleeve portion (73), in which radially inwardly an annular channel (7') is formed, extending coaxially to a rotational axis (A'),
an inner disc carrier (38') with inner discs (39') which inner disc carrier (38') being rotatably held in the housing (35') around the rotational axis (A'), wherein the inner disc carrier (38') is formed sleeve-like and has in the area of the annular channel (7') a plurality of circumferentially distributed radial through openings (31');
an outer disc carrier (36') with outer discs (38') which outer disc carrier (36') being rotatably held relative to the inner disc carrier (38') around the rotational axis (A') and running in an oil sump, wherein the inner discs (39') and the outer discs (38') are arranged axially alternatingly and form a disc set (40');
an oil return element (3'), connected to the housing (35') and which has a wiper (10') abutting above the oil sump an outer face (21') of the outer disc carrier (38') and which oil return element (3') further has a channel (6') connected to the wiper (10'), which channel (6') is connected to the annular channel (7') for the oil supply;
an oil scoop wheel (4'), connected to the inner disc carrier (38'), having a plurality of circumferentially distributed blades (24'), which are arranged in the area of the through openings (31') and extend into the annular channel (7') and, when the inner disc carrier (38') rotates relative to the housing (35'), deliver oil from the annular channel (7') through the through openings (31') to the clutch chamber.

20. Multi-disc clutch according to claim 19,
**characterised in**
**that** the sleeve portion (73) has a connection channel (74) with an entering opening, arranged outwards and in which the channel (6') ends, and an exit opening, arranged inwards and ending in the annular channel (7').

21. Multi-disc clutch according to claim 19 or 20,
**characterised in**
**that** the connection channel (74) is, in the mounted condition of the multi-disc clutch, orientated generally vertically.

22. Multi-disc clutch according to one of claims 19 to 21,
**characterised in**
**that** the inner disc carrier (38') has in the area of the disc set (40') radial through openings (41').

## Revendications

1. Agencement de distribution d'huile destiné à l'utilisation dans un carter stationnaire dans lequel tournent les uns par rapport aux autres des composants de machine autour d'un axe de rotation, comprenant
un élément de retour d'huile (3) qui peut être relié au carter et présente un racleur (10) destiné à venir s'appliquer sur une surface extérieure (21) de l'un des composants de machine ;
au moins un canal (6) qui est alimenté en huile par le racleur (10) et débouche dans un canal annulaire (7) coaxial à l'axe de rotation (A) ; et
une roue de distribution d'huile (4) pouvant être reliée à l'un des composants de machine et comprenant plusieurs ailettes (24) qui sont réparties autour de l'axe de rotation (A), plongent dans le canal annulaire (7), et refoulent de l'huile hors du canal annulaire (7) lors de la rotation de la roue de distribution d'huile (4) par rapport à l'élément de retour d'huile (3).

2. Agencement de distribution d'huile selon la revendication 1,
**caractérisé en ce que** la roue de distribution d'huile (4) peut être reliée au même composant de machine sur la surface extérieure (21) duquel s'applique le racleur (10) de l'élément de retour d'huile (3).

3. Agencement de distribution d'huile selon la revendication 2,
**caractérisé en ce que** le racleur (10), le canal (6) et le canal annulaire (7) sont réalisés d'un seul tenant et forment en commun l'élément de retour d'huile (3).

4. Agencement de distribution d'huile selon la revendication 2 ou 3,
**caractérisé en ce que** le canal (6) s'étend de manière sensiblement radiale du racleur (10) au canal annulaire (7).

5. Agencement de distribution d'huile selon l'une des revendications 2 à 4,
**caractérisé en ce que** le canal annulaire (7) présente, vue en coupe longitudinale, un profil sensiblement en forme de C, qui est ouvert latéralement.

6. Agencement de distribution d'huile selon l'une des revendications 2 à 5,
**caractérisé en ce que** l'élément de retour d'huile (3) comprend un corps de base (5) sur lequel sont agencés le canal (6) et le canal annulaire (7).

7. Agencement de distribution d'huile selon la revendication 6,
**caractérisé en ce que** le corps de base (5) est d'une configuration en forme de disque et présente un évidement de passage (9) reliant le canal (6) au canal annulaire (7).

8. Agencement de distribution d'huile selon l'une des revendications 2 à 7,
**caractérisé en ce que** la roue de distribution d'huile (4) comprend un anneau (22) avec des évidements de passage (23) d'orientation axiale, les ailettes (24) faisant saillie de l'anneau à la manière d'aubes, au voisinage des évidements de passage (23) en se référant à la direction périphérique, en vue de refouler de l'huile à travers les évidements de passage (23) dans le cas d'une rotation du composant de machine (33) dans un sens de rotation préférentiel.

9. Agencement de distribution d'huile selon la revendication 1,
**caractérisé en ce que** la roue de distribution d'huile (4') peut être reliée à un autre composant de machine que le composant de machine sur lequel s'applique l'élément de retour d'huile (3') avec son racleur (10').

10. Agencement de distribution d'huile selon la revendication 9,
**caractérisé en ce que** le racleur (10') et le canal (6') sont réalisés d'un seul tenant et forment en commun l'élément de retour d'huile (3').

11. Agencement de distribution d'huile selon la revendication 9,
**caractérisé en ce que** l'élément de retour d'huile (3') est raccordé avec son canal (6') à un canal de liaison (74) qui est formé dans le carter (35') et débouche dans le canal annulaire (7').

12. Agencement de distribution d'huile selon l'une des revendications 9 à 11,
**caractérisé en ce que** le canal annulaire (7') dans le carter (35') est ouvert radialement vers l'intérieur.

13. Agencement de distribution d'huile selon l'une des revendications 9 à 12,
**caractérisé en ce que** la roue de distribution d'huile (4') comprend un anneau (22') avec des évidements de passage (23') d'orientation radiale, les ailettes (24') faisant saillie de l'anneau à la manière d'aubes, au voisinage des évidements de passage (23') en se référant à la direction périphérique, en vue de refouler de l'huile radialement vers l'intérieur à travers les évidements de passage (23'), dans le cas d'une rotation dans un sens de rotation préférentiel.

14. Agencement de distribution d'huile selon l'une des revendications 1 à 13,
**caractérisé en ce que** le racleur (10) présente en section transversale, un profil sensiblement en forme de C.

15. Embrayage à disques multiples (33) avec un agencement de distribution d'huile (2), comprenant
un support de disques extérieurs (36) avec des disques extérieurs (37), qui peut tourner autour d'un axe de rotation (A) et se déplace dans un bain d'huile ;
un support de disques intérieurs (38) avec des disques intérieurs (39), qui peut tourner par rapport au support de disques extérieurs (36) dans un carter (35), autour de l'axe de rotation (A), les disques intérieurs (39) et les disques extérieurs (37) étant agencés de manière alternée dans la direction axiale et formant un empilement de disques (40) ;
une partie de fond (46) formée sur l'un des deux supports de disques (36, 38) et comprenant plusieurs évidements de passage (31) d'orientation axiale, qui délimite une chambre d'embrayage de forme annulaire formée entre les deux supports de disques (36, 38) ;
un élément de retour d'huile (3) qui est relié de manière fixe au carter (35) et présente un racleur (10) s'appliquant, au-dessus du bain d'huile, sur une surface extérieure du support de disques extérieurs (36), un canal (6) relié au racleur, et un canal annulaire (7) coaxial à l'axe de rotation (A) et relié au canal (6) ; et
une roue de distribution d'huile (4) reliée à la partie de fond (46) et comportant plusieurs ailettes (24) qui sont réparties dans la direction périphérique, agencées dans la zone des évidements de passage (31), plongent dans le canal annulaire (7), et, lors de la rotation de la partie de fond (46) par rapport au carter (35), refoulent de l'huile du canal annulaire (7) dans la chambre d'embrayage, à travers les évidements de passage (31).

16. Embrayage à disques multiples selon la revendication 15,
**caractérisé en ce que** l'élément de retour d'huile (3) est agencé dans le carter (35) de manière telle, que le canal (6) soit sensiblement d'une orientation verticale.

17. Embrayage à disques multiples selon la revendication 15 ou 16,
**caractérisé en ce que** la partie de fond (46) et le support de disques extérieurs (36) sont d'une configuration d'un seul tenant, un moyeu (47) étant formé radialement à l'intérieur sur le fond (46), et un arbre pouvant être engagé par une liaison fixe de rotation dans ledit moyeu.

18. Embrayage à disques multiples selon la revendication 17,
**caractérisé en ce que** le support de disques intérieurs (38) est d'une configuration en forme de douille, et présente, dans la zone de l'empilement de disques (40), des évidements de passage (41) d'orientation radiale, le moyeu (47) s'engageant axialement dans le support de disques intérieurs (38).

19. Embrayage à disques multiples (33') avec un agencement de distribution d'huile (2'), comprenant
un carter (35') avec un embout en douille (73), dans lequel est formé radialement à l'intérieur, un canal annulaire (7') coaxial à un axe de rotation (A') ;
un support de disques intérieurs (38') avec des disques intérieurs (39'), qui est monté rotatif autour de l'axe de rotation (A') dans le carter (35'), le support de disques intérieurs (38') étant d'une configuration en forme de douille et présentant, dans la zone du canal annulaire (7'), plusieurs évidements de passage (31') d'orientation radiale et répartis en périphérie ;
un support de disques extérieurs (36') avec des disques extérieurs (37'), qui est monté rotatif par rapport au support de disques intérieurs (38') autour de l'axe de rotation (A') et se déplace dans un bain d'huile, les disques intérieurs (39') et les disques extérieurs (37') étant agencés de manière alternée dans la direction axiale et formant un empilement de disques (40') ;
un élément de retour d'huile (3') qui est relié de manière fixe au carter (35') et présente un racleur (10') s'appliquant, au-dessus du bain d'huile, sur une surface extérieure (21') du support de disques extérieurs (36'), et un canal (6') relié au canal annulaire (7') pour l'alimentation en huile ;
un roue de distribution d'huile (4') reliée au support de disques intérieurs (38') et comportant plusieurs ailettes (24') réparties en périphérie, qui sont agencées dans la zone des évidements de passage (31') et plongent dans le canal annulaire (7'), et qui, en cas de rotation du support de disques intérieurs (38') par rapport au carter (35'), refoulent de l'huile du canal annulaire (7') dans la chambre d'embrayage, à travers les évidements de passage (31').

20. Embrayage à disques multiples selon la revendication 19,
**caractérisé en ce que** l'embout en douille (73) présente un canal de liaison (74) avec une ouverture d'entrée située à l'extérieur, dans laquelle débouche le canal (6'), et une ouverture de sortie située à l'intérieur, qui débouche dans le canal annulaire (7').

21. Embrayage à disques multiples selon la revendication 19 ou 20,
**caractérisé en ce que** le canal de liaison (74) est orienté sensiblement à la verticale dans l'état implanté de l'embrayage à disques multiples.

22. Embrayage à disques multiples selon l'une des revendications 19 à 21,
**caractérisé en ce que** le support de disques intérieurs (38') présente, dans la zone de l'empilement de disques (40'), des évidements de passage (41') d'orientation radiale.
